# EUROPEAN PATENT APPLICATION

(11) **EP 3 590 647 A1**
(43) Date of publication of application: **08.01.2020**
(21) Application number: 19183912.5
(22) Date of filing: 02.07.2019
(51) Int. Cl.: B23K 26/02, B23K 26/046, B23K 26/352

(54) **PROCESSING METHOD, PROCESSING SYSTEM, AND PROGRAM FOR PROCESSING**

(30) Priority: 04.07.2018 JP 2018127680
(71) Applicant: DGSHAPE Corporation, Hamamatsu-shi, Shizuoka 431-2103 (JP)
(72) Inventor: UEDA, Jun, Hamamatsu-shi, Shizuoka 4312103 (JP); MAEDA, Toshio, Hamamatsu-shi, Shizuoka 4312103 (JP); YOSHIDA, Makoto, Hamamatsu-shi, Shizuoka 4312103 (JP)
(74) Representative: Grünecker Patent- und Rechtsanwälte PartG mbB

(57) **Abstract**

To provide processing methods, processing systems, and programs for processing, with which processing with high precision can be performed even when a process surface is complicated.

A processing method including a step of moving a focal position of a laser along a certain processing path in order to form an object having a certain process surface, the processing method including: a first step of moving a focal position of a laser having a first process diameter along a certain processing path; and a second step of moving a focal position of a laser having a second process diameter along a certain processing path in the case that a projection area of the laser having the first process diameter comes into contact with two points of the certain process surface, the second process diameter being smaller than the first process diameter.

## Description

### Technical field

The present invention relates to processing methods, processing systems, and programs for processing, for use in processing workpieces by projecting lasers into workpieces.

### Background art

Laser processing methods for forming objects having a certain process surface, by projecting lasers into workpieces, and laser processing devices using the same have been known.

For example, JP-A-2017-074259 discloses an artificial tooth creating device for creating an artificial tooth, which changes a relative positional relationship between a tool and a workpiece in three dimensions based on processing data and mills the workpiece using the tool, the device including: generating means that generates a marking data, the marking data being a data representing an area in which an artificial tooth to be created at a certain position of the workpiece can be encompassed, and marking means that performs marking on a surface of the workpiece by projecting light onto the surface of the workpiece based on the marking data generated by the generating means, the marking means performing marking by emitting a laser beam to the workpiece, the laser beam being a laser for drawing an area based on the marking data.

The aforementioned artificial tooth creating device performs processing by projecting, into workpieces, laser beams with a fixed focusing diameter regardless of the complexity of the process surface. With a configuration of such an artificial tooth creating device, if the process surface has a depression of a size smaller than the focusing diameter of the laser beam, the laser beam cannot be projected to form the depression. The laser beam, when projected toward the depression, results in processing of a portion other than the surface intended to be processed, producing a depression larger in size than a desired depression. That is, as the desired process surface becomes more complicated, it becomes more difficult to process with high precision.

Thus, the present invention was made in view of the aforementioned circumstances, and an object to be achieved by the present invention is to provide processing methods, processing systems, and programs for processing, with which processing with high precision can be performed even when a desired process surface is complicated.

### Summary of the invention

The main invention to achieve the aforementioned object is a processing method including a step of moving a focal position of a laser along a certain processing path in order to form an object having a certain process surface, the processing method including: a first step of moving a focal position of a laser having a first process diameter along a certain processing path; and a second step of moving a focal position of a laser having a second process diameter along a certain processing path in the case that a projection area of the laser having the first process diameter comes into contact with at least two points of the certain process surface, the second process diameter being smaller than the first process diameter. Other features of the present invention are disclosed in the description of the specification and drawings below.

### Effect of the invention

According to the present invention, it is possible to provide processing methods, processing systems, and programs for processing, with which processing with high precision can be made even when a desired process surface is complicated.

### Brief description of the drawings

Fig. 1 is a diagram for use in explaining a configuration of a processing system according to an embodiment of the present invention;
Fig. 2 is a diagram for use in explaining the definition of a process diameter of a laser;
Fig. 3 is a diagram for use in explaining a process diameter acquiring process according to an embodiment of the present invention;
Fig. 4 is a schematic sectional view for use in explaining a laser projection process according to an embodiment of the present invention;
Fig. 5 is a schematic sectional view for use in explaining a laser projection process according to an embodiment of the present invention;
Fig. 6 is a schematic sectional view for use in explaining a laser projection process according to an embodiment of the present invention;
Fig. 7 is a schematic sectional view for use in explaining a laser projection process according to an embodiment of the present invention;
Fig. 8 is a schematic sectional view for use in explaining a laser projection process according to an embodiment of the present invention;
Fig. 9 is a schematic sectional view for use in explaining a laser projection process according to an embodiment of the present invention; and
Fig. 10 is a schematic sectional view for use in explaining a laser projection process according to an embodiment of the present invention.

### Detailed description of the invention

### === Embodiments ===

Referring to the drawings, an embodiment of the present invention is described below. The embodiment described below, however, includes various limitations that are technically preferable for the purpose of implementing the present invention. Thus, the scope of the present invention is not limited to the following embodiment and illustrated examples.

### [Configuration of processing system]

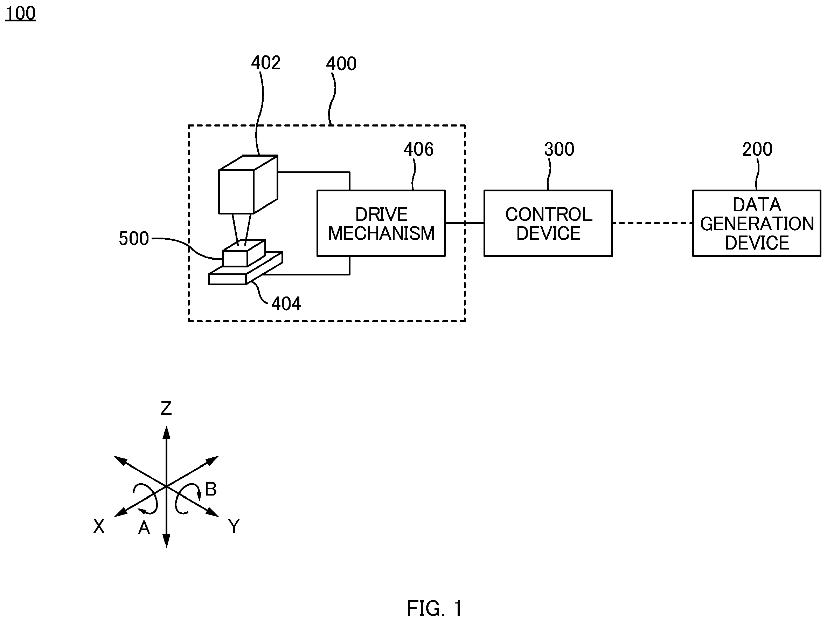

First, a configuration of a processing system 100 according to this embodiment is described in detail. Fig. 1 is a view illustrating a configuration of the processing system 100 according to this embodiment. The processing system 100 according to this embodiment includes a data generation device 200, a control device 300, and a processing device 400.

The data generation device 200 is for generating a data (processing data) of a certain process surface to be formed in a workpiece 500 and a processing path data. The data generation device 200 supplies the generated processing data and processing path data to the control device 300.

The data of the process surface is used by the control device 300 for processing an intended objects. The processing data is generated in the data generation device 200 according to each three-dimensional data of the intended object and each three-dimensional data of the workpiece 500. For example, when processing a dentistry prosthesis, a processing data is generated using a three-dimensional data obtained by scanning the oral cavity with a CCD camera or an X-ray CT. The three-dimensional data of each object is STL data or solid data used in three-dimensional CAD, or data such as 3 MF or AMF used in 3D printers. The output data may be in any format as long as the data can be used by the control device 300.

The processing path data represents one or more paths (processing paths) along which each focal position of a laser is moved when the laser is projected into a workpiece. The processing path data includes a plurality of three-dimensional coordinates data arranged at intervals on the processing path. The processing path data further includes process diameter data associated with each of the plurality of three-dimensional coordinates data. The process diameter data represents a process diameter of a laser at each of the plurality of three-dimensional coordinates.

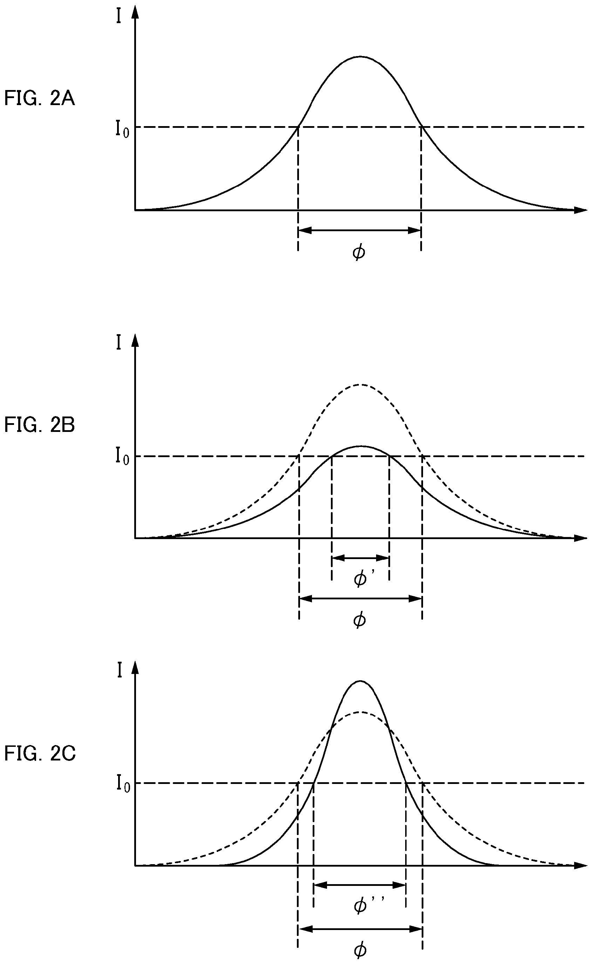

Here, the definition of the "process diameter" in this embodiment is described using the drawings. Fig.2(a) is a schematic diagram for use in explaining the process diameter of a laser. In this example, an intensity distribution of a laser in a plane perpendicular to the optical axis of the laser is shown. In this example, the intensity distribution of the laser is axially symmetric with respect to the optical axis of the laser, and appears as substantially Gaussian distribution.

In order to process the workpiece 500, the laser intensity with a certain value or larger is required depending on the material of the workpiece 500. Assuming that the minimum laser intensity required for that purpose is I₀, the diameter of an area of a laser flux having the laser intensity I₀ or higher is defined as a process diameter ϕ (Fig. 2(a)).

The processing path data is generated by the data generation device 200 based on, for example, three-dimensional data of an intended object or three-dimensional data of the workpiece 500.

The processing path data further includes information on the direction in which the focal position of the laser is moved in the processing path. The processing path data may include a plurality of processing paths. In that case, information on the order in which the processing is performed in one processing path may be included for each of the plurality of processing paths.

The processing device 400 is for projecting a laser into the workpiece 500 to form a three-dimensional object having a certain process surface. The workpiece 500 can be made of a material that transmits lasers (transparent material) or a material that does not transmit lasers (opaque material). The transparent material is, for example, a glass material, a glass ceramic material having high light transmittance, or a resin material (e.g., an acrylic resin). The opaque material is, for example, a zirconia material used as a denture material or a common metal material. Transparent materials need not have 100% or equivalent light transmittance and any transmittance value will suffice as long as the laser reaches an area to be processed inside the material and can achieve processing.

A configuration of the processing device 400 according to this embodiment is described. The processing device 400 according to this embodiment includes a projection unit 402, a holding unit 404, and a drive mechanism 406.

The projection unit 402 projects a laser into the workpiece 500. In this embodiment, the projection unit 402 includes a laser oscillator, a group of lenses and a galvanometer mirror for directing the laser produced by the oscillator to the workpiece 500, and an optical device such as an attenuator for adjusting the laser intensity. Any kind of laser can be used as long as the workpiece 500 can be processed. For example, an ordinary infrared laser for thermal processing can be used for metal materials. Alternatively, ultrashort laser pulses can be used for direct processing of inside the material. Ultrashort laser pulses are a kind of pulses with durations between picoseconds and femtoseconds. Ablation (non-thermal machining) can be performed by exposing a certain position inside the workpiece 500 to ultrashort laser pulses for a short duration. During ablation, the portion of material that is molten using the laser instantaneously evaporates and scatters, thereby being eliminated; therefore, damage to the ablated portion due to heat is lower than that using typical laser machining (thermal machining). Ablation is particularly effective for machining small-sized objects, such as dentistry prostheses.

The holding unit 404 is for holding a workpiece 500. Any method can be used for holding the workpiece 500 as long as the workpiece 500 being held can be moved along and rotated around one of the five axes. For example, it is possible to use a method of clamping and holding a disk-shaped workpiece 500 with a clamp as in the case of milling using a conventional five-axis machining device or a method of bonding a metal pin to a block-like workpiece 500 and inserting the pin into the holding unit 404 to hold the workpiece 500.

The drive mechanism 406 moves the projection unit 402 and the holding unit 404 relative to each other. The drive mechanism 406 has a driving motor and the like. The processing device 400 according to this embodiment has five driving axes (the x-, y-, and z-axes as well as the A-rotation axis (the rotation axis around the x-axis) and B-rotation axis (the rotation axis around the y-axis).

The control device 300 controls operations of the processing device 400. Specifically, the control device 300 controls the drive mechanism 406 to adjust the relative position between the projection unit 402 and the holding unit 404 (the workpiece 500) such that the laser can be projected at the positions corresponding to the processing data inside the workpiece 500. Furthermore, the control device 300 controls the projection unit 402 to adjust focal positions of lasers, adjust a process diameter of each projected laser, and project a laser into the workpiece 500 for a certain period of time.

In this embodiment, in particular, the control device 300 can control the projection unit 402 to adjust a process diameter of each laser. The process diameter ϕ of the laser can be adjusted or controlled in a variety of ways, such as by narrowing the beam on the optical axis with an aperture or the like. In particular, in the case of processing with ultrashort laser pulses, it is possible to observe a light sphere obtained by ionizing molecules in the air with a beam collected in the air, and to observe changes in the brightness and diameter of the light sphere depending on the laser intensity. As an example, the workpiece 500 can be processed by this ionized light sphere. In this case, the aforementioned laser intensity I₀ is the laser intensity necessary to ionize molecules in the atmosphere, and the aforementioned process diameter ϕ corresponds to the diameter of this ionized light sphere.

As another example, the process diameter ϕ can be adjusted by adjusting the intensity I of the projected laser. That is, the peak can be increased or decreased by adjusting the intensity I of the applied laser with the width of the Gaussian distribution kept unchanged, and the process diameter can be increased or decreased accordingly. The intensity I of the applied laser can be controlled by a method of directly controlling the output signal to the laser oscillator or the intensity of the laser beam can be controlled by using an external optical system. As a method of controlling the laser intensity by an external optical system, for example, adjustment can be performed using an attenuator. As described above, the control device 300 according to this embodiment includes an attenuator for adjusting the intensity I of the laser. That is, the control device 300 according to this embodiment can adjust the process diameter by controlling the attenuator. Fig. 2(b) shows an example of switching to a laser having a process diameter ϕ' smaller than the process diameter ϕ by attenuating the laser intensity using the attenuator.

As another example, the process diameter can be adjusted by adjusting a spot diameter of the laser. The theoretical limit of the minimum spot diameter D0 obtained when a single mode laser is converged through a lens with a focal length f can be expressed approximately as D0 = 4λf/πD, where λ is the wavelength and D is the diameter of the incident laser. That is, by adjusting the focal length f of the lens, the wavelength λ of the laser, and the diameter D of the incident laser, the spot diameter can be adjusted, and in turn the process diameter can be adjusted. Fig. 2(c) shows an example of switching to a laser having a process diameter ϕ" smaller than the process diameter ϕ by reducing the focusing diameter.

As described above, in order for the control device 300 to adjust the process diameter, it is necessary to obtain a relationship between the process diameter and the laser projection condition. Here, the laser projection condition is at least one laser projection condition selected from, for example, the aforementioned intensity I of the laser, the focal length f of the lens, the wavelength λ of the laser, the diameter D of the incident laser, and the like. A method of obtaining the relationship between the process diameter and the laser projection conditions is described.

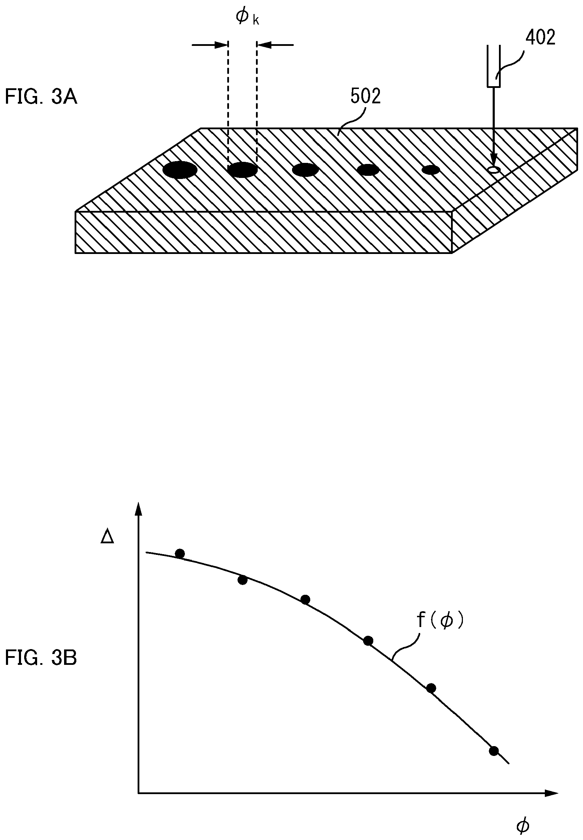

Fig. 3 is a diagram for use in explaining a method of obtaining a relationship between the process diameter and the laser projection condition. In this embodiment, the intensity I of the laser is used as the laser projection condition. First, a material 502 made of the same material as the workpiece 500 is prepared. Then, lasers are projected into the material 502 for each of a plurality of values of a parameter Δ related to the selected laser projection condition (in this embodiment, the intensity I of the laser) (Fig. 3(a)). The diameter of a depression or a through-hole thus formed in the material 502 is considered as the process diameter ϕₖ (k = 1, 2, 3, ...) to create a scatter chart of the measured process diameters and the parameter Δ. From this scatter diagram, a function f(cp) of the process diameter ϕ with respect to the parameter Δ is formulated (Fig. 3(b)). In this formulation, an optimal formula is searched by assuming functional forms. The form of the function at this time is not particularly limited. For example, assuming an n-th order function (n is an integer), an n-th order function optimized by the least square method may be searched.

### [Processing method]

A processing method using the aforementioned processing system 100 according to this embodiment is described in detail. The processing method using the aforementioned processing system 100 according to this embodiment is performed by the control device 300 controlling the processing device 400.

The processing method according to this embodiment includes a laser projection process of moving the focal position of the laser along a certain processing path in order to form an object having a certain process surface S. Examples of three types of laser projection processes are described in detail below using drawings.

### (Example of first laser projection process)

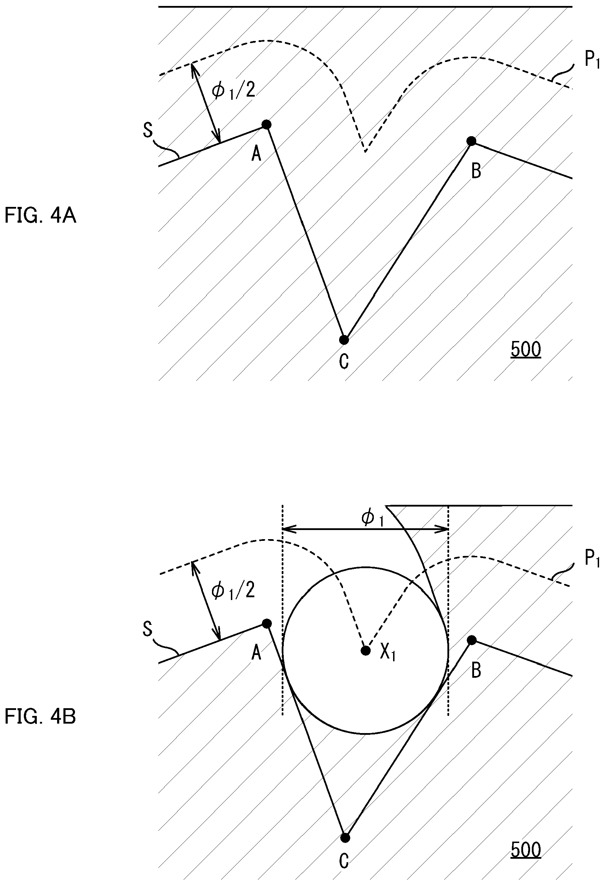

First, an example of a first laser projection process is described. Figs. 4 to 6 are schematic sectional views for use in explaining the laser projection process of this example. In this embodiment, since STL data is assumed as processing data, the shape of the process surface S is represented by a set of triangles. Along with this, in the schematic sectional views shown in Figs. 4 to 6, the shape of the process surface S is represented by a set of line segments. In these figures, three vertices (points A, B, and C) of the process surface S are shown. In these figures, a depression on the process surface S is shown, which includes the line segment AC and the line segment BC.

The laser used in this embodiment is adjusted by the control device 300 to have a process diameter based on the process diameter data included in the processing path data. The process diameter is adjusted using the relationship (Δ = f(ϕ)) of the process diameter ϕ to the parameter Δ according to the laser projection condition, which is acquired beforehand by the aforementioned method. The parameter Δ according to the laser projection condition used in this embodiment is the laser intensity. The laser intensity can be adjusted using an attenuator.

In the example of the first projection process, the laser projection process includes a first step and a second step. The first step is a step of moving the focal position of the laser having a first process diameter ϕ₁ along a processing path P₁ shown in Fig. 4(a).

The first process diameter ϕ₁ and the processing path P₁ are predetermined by the data generation device 200. The first process diameter (ϕ₁) is not particularly limited and, for example, a process diameter around those used in the conventional processing method may be sufficient. The processing path P₁ is a set of points whose distance from the process surface S is half the first process diameter ϕ₁.

In the first step, as shown in Fig. 4(b), the workpiece 500 is processed using a laser having a first process diameter ϕ₁. In this case, the drive mechanism 406 is controlled such that the focal position of the laser moves on the processing path P₁. In this example, the focal position of the laser moves in the direction from a point A to a point B along the processing path P₁. During this movement, when the focal position of the laser reaches a point X₁ on the processing path P₁, a circle of a diameter of ϕ₁ with its center at the focal position of the laser contacts line segments AC and BC. That is, a projection area of a laser projection area which has the first process diameter ϕ₁ comes in contact with two points on the certain process surface S. Here, the projection area means a spherical region of which diameter coincides with the process diameter of the laser, with the focal position of the laser located at the center. At this stage, any portion inside the process surface S is not processed but a certain portion closer to the point C is left unprocessed.

The second step is for moving, along a processing path P₂, a focal position of a laser having a process diameter that is smaller than the first process diameter ϕ₁ in the case that the projection area of the laser which has the first process diameter ϕ₁ comes in contact with two points on the certain process surface S in the first step.

Before performing the second step, the process diameter of the laser emitted from the processing device 400 is switched from the first process diameter ϕ₁ to a second process diameter ϕ₂. Here, the second process diameter ϕ₂ is smaller than the first process diameter ϕ₁, and in this embodiment, the second process diameter ϕ₂ and the processing path P₂ are determined beforehand by the data generation 200 in the following manner.

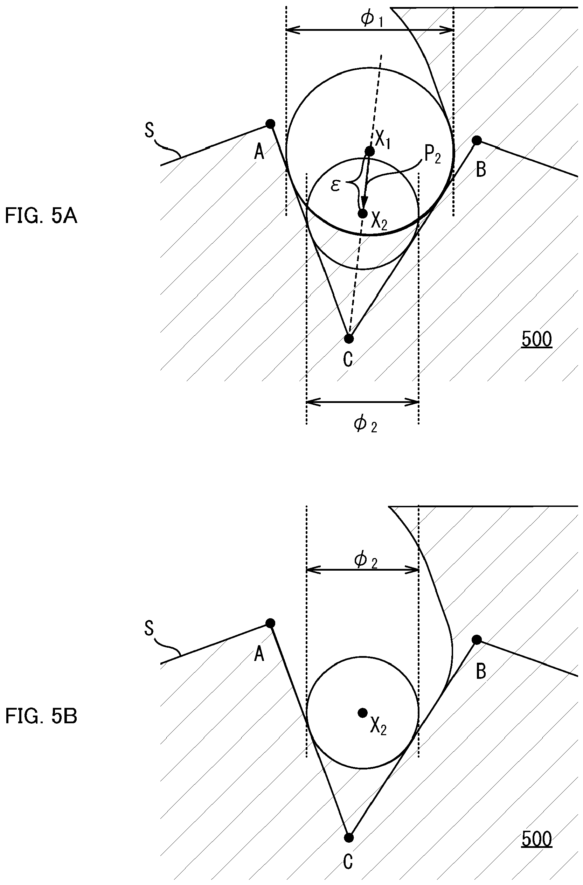

First, a point at the given distance ε from the point X₁ on the line segment connecting the point X₁ and the point C is defined as a point X₂. Then, the diameter of a circle that is in contact with the line segments AC and BC with its center at X₂ is defined as the second process diameter ϕ₂ (Fig. 5 (a)). Then, a line segment connecting the point X₁ and the point X₂ is defined as the processing path P₂ (Fig. 5(a)).

In the second step, the control device 300 switches the process diameter of the laser emitted from the processing device 400 to the second process diameter ϕ₂ using the aforementioned formula Δ = f(ϕ).

Next, as shown in Fig. 5(b), the workpiece 500 is processed using a laser having the second process diameter ϕ₂. In this case, the drive mechanism 406 is controlled such that the focal position of the laser moves from the point X₁ to the point X₂ along the processing path P₂. When the focal position of the laser has been moved to the point X₂, the projection area of the laser comes in contact with two points on the process surface S. At this stage, in an area near the point C, the portion that could not be processed by the processing using the laser having the first process diameter ϕ₁ can be processed.

Furthermore, when the projection area of the laser which has the second process diameter ϕ₂ comes in contact with two points on the certain process surface S, the process diameter of the laser emitted from the processing device 400 is switched from the second process diameter ϕ₂ to a third process diameter ϕ₃. The third process diameter ϕ₃ is smaller than the second process diameter ϕ₂, and in this embodiment, the third process diameter ϕ₃ is determined beforehand by the data generation device 200 in the following manner.

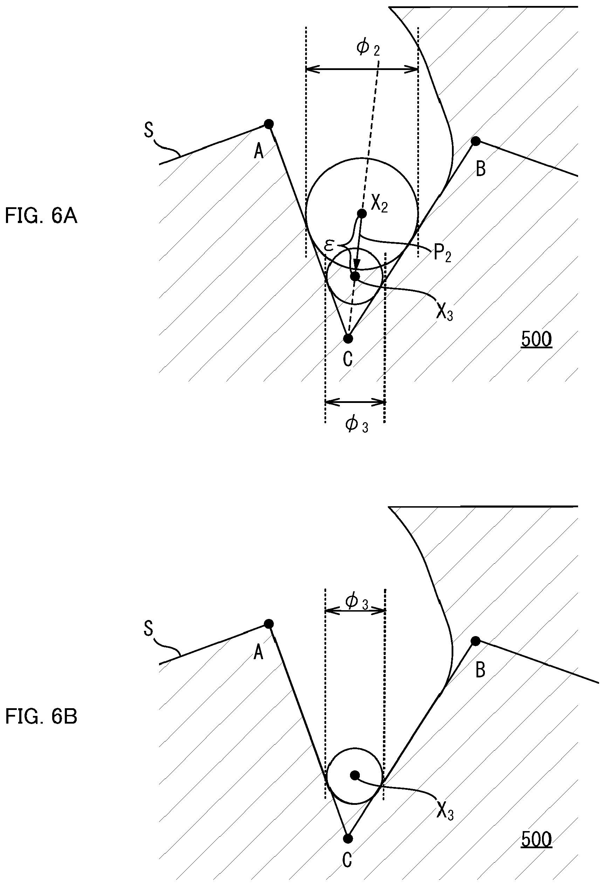

First, a point at the given distance ε from the point X₂ on the line segment connecting the points X₂ and C is defined as a point X₃. Then, the diameter of a circle that is in contact with the line segments AC and BC with its center at X₃ is defined as the third process diameter ϕ₃ (Fig. 6 (a)). Then, a line segment connecting the points X₂ and X₃ is defined as the processing path P₂ (Fig. 6(a)).

The control device 300 switches the process diameter of the laser emitted from the processing device 400 to the third process diameter ϕ₃ using the aforementioned formula Δ = f(ϕ).

Next, as shown in Fig. 6(b), the workpiece 500 is processed using a laser having the third process diameter ϕ₃. In this case, the drive mechanism 406 is controlled such that the focal position of the laser moves from the point X₂ to the point X₃ along the processing path P₂. When the focal position of the laser has been moved to the point X₃, the projection area of the laser comes in contact with two points on the process surface S. At this stage, in the area near the point C, the portion that could not be processed by the processing using the laser having the second process diameter ϕ₂ can be processed.

Using the same method as described above, the processing using the laser having the k-th process diameter ϕₖ (k = 4, 5, ...) is repeated until the processing of the depression is completed. These operations may be repeated until the process diameter reaches the minimum value adjustable by the processing device 400, or may be terminated by a predetermined number of times. Further, the given distance ε may have any value. The same value may be used as in the present embodiment or different values may be used in the repetition of the aforementioned method.

After the processing of the depression has been completed in the second step, the control device 300 changes the process diameter of the laser to the first process diameter ϕ₁ and restarts the first step. Thereafter, in the first step, the control device 300 performs the second step again to process a depression in a similar manner in the case that the projection area of the laser which is the first process diameter ϕ₁ comes in contact with two points on the certain process surface S again. The above steps are repeated, and when the first steps have been completed over the entire processing path P₁, the laser projection process is completed.

In this example, in the second step, the exemplified processing proceeds with the process diameters getting smaller and smaller from the first process diameter ϕ₁, to the second process diameter ϕ₂, the third process diameter ϕ₃, and so on in a range smaller than the first process diameter ϕ₁. However, the present invention is not limited to this. For example, in the second step, processing may be performed with the process diameters getting larger and larger in a range smaller than the first process diameter ϕ₁.

Summarizing the example described above, the second step is for moving the focal position of the laser along the processing path P₂ passing through the points X₁, X₂, X₃, ... Xₙ with the process diameters of the laser being changed to the second process diameter ϕ₂, the third process diameter ϕ₃, ... to the n-th process diameter ϕₙ such that the projection area of the laser are in contact with two points on the certain process surface S.

This can also be reworded as follows. The second process diameter ϕ₂, the third process diameter ϕ₃, ..., the n-th process diameter ϕₙ are now defined as a variable second process diameter ϕ₂'. Then, the second step can be said as a step in which the focal position of a laser is moved along the processing path P₂ with the variable second process diameter ϕ₂' being changed such that the projection area of the laser comes in contact with two points of the certain process surface S. In this case, the processing path P₂ along which the focal position of the laser moves is a set a collection of central points of certain circles which contact with two points on the certain process surface S.

In the example described above, in the process of moving the focal position of the laser along the certain processing path(s), the process diameter of the laser is adjusted to be smaller in the case that the projection area of the laser comes in contact with two points on the certain process surface S. In general, however, adjustment is made to make the process diameter of the laser smaller in the case that the projection area of the laser comes in contact with at least two points on the certain process surface S.

### (Example of second laser projection process)

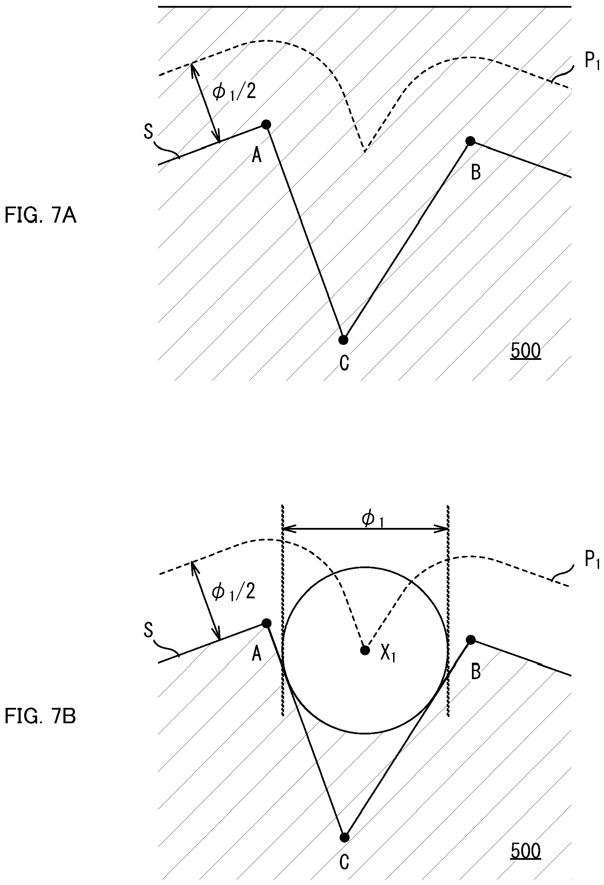

Next, an example of a second laser projection process is described. Figs. 7 to 9 are schematic sectional views for use in explaining a laser projection process of this example. In this example, the laser projection process has a first step and a second step. This example is different from the example of the first laser projection process in that the second step is performed after the first step has been completed.

As shown in Fig. 7(a), a processing path P₁ along which a laser having a first process diameter ϕ₁ is projected is determined by the data generation device 200. Here, the first process diameter ϕ₁ is determined beforehand as in the example of the first laser projection process described above. In the first step, as shown in Fig. 7(b), the focal position of the laser having the first process diameter ϕ₁ is moved along the entire length of the processing path P₁. When the first step has been completed, an unprocessed portion which is a depression remains in the vicinity of a point C. That is, it can be said that the first step is a rough processing step.

The second step is for moving a focal position of a laser having a process diameter smaller than the first process diameter ϕ₁ along a predetermined processing path P₂ in the unprocessed portion of the workpiece 500 which has left after the first step. That is, it can be said that the second step is a finishing step of processing the unprocessed portion of the workpiece 500 that has left after the first step.

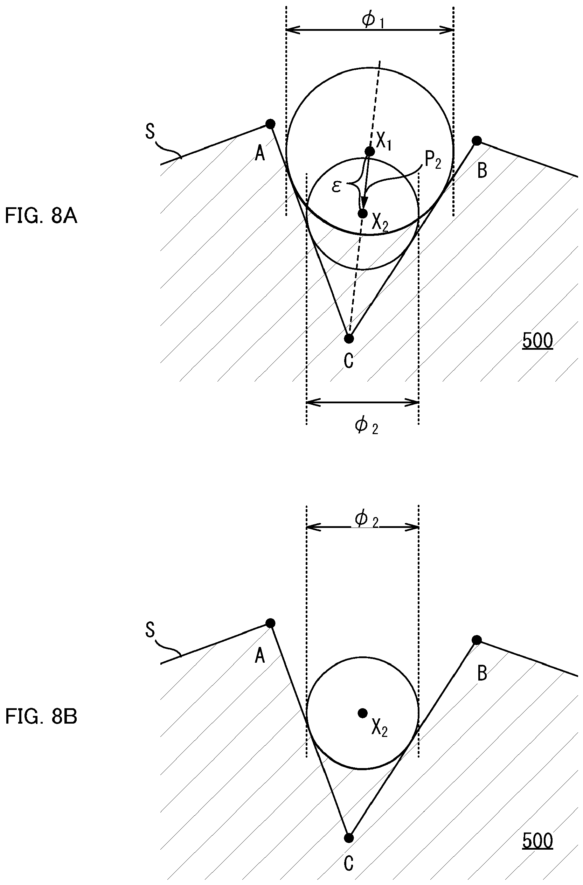

First, as shown in Figs. 8(a) and 8(b), the workpiece 500 is processed using a laser having a second process diameter ϕ₂. In this example, the focal position of the laser is just moved from the point X₁ to the point X₂ along the processing path P₂. Here, the second process diameter ϕ₂ and the processing path P₂ are the same as those used in the first example, and are determined beforehand by the data generation device 200. When the focal position of the laser has been moved to the point X₂, the projection area of the laser comes in contact with two points on the process surface S. At this stage, in an area near the point C, the portion which could not be processed by the processing using the laser having the first process diameter ϕ₁ can be processed.

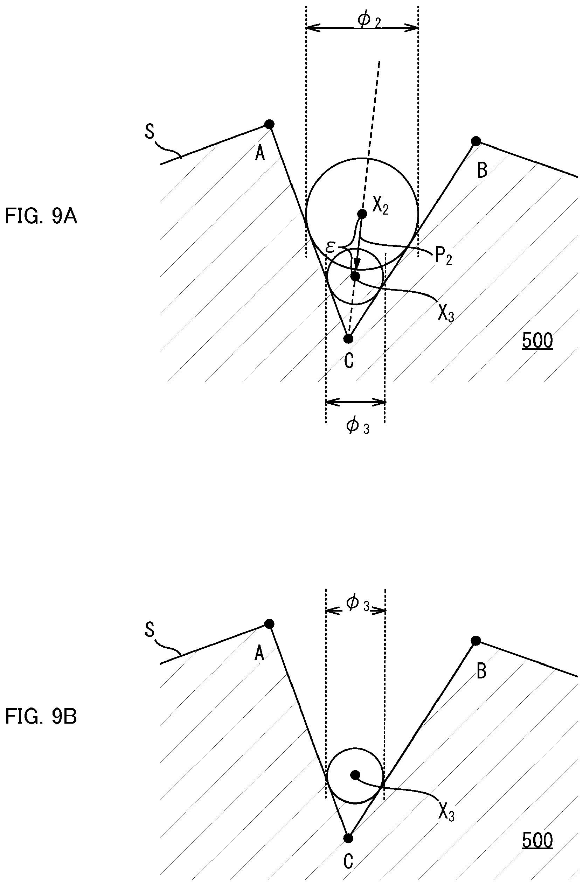

Next, as shown in Figs. 9(a) and 9(b), the workpiece 500 is processed using a laser having a third process diameter ϕ₃. In this example, the focal position of the laser is just moved from the point X₂ to the point X₃ along the processing path P₂. Here, the third process diameter ϕ₃ and the processing path P₂ are the same as those used in the example of the first projection step, and are determined beforehand by the data generation device 200. When the focal position of the laser has been moved to the point X₃, the projection area of the laser comes in contact with two points on the process surface S. At this stage, in an area near the point C, the portion which could not be processed by the processing using the laser having the second process diameter ϕ₂ can be processed.

### (Example of third laser projection process)

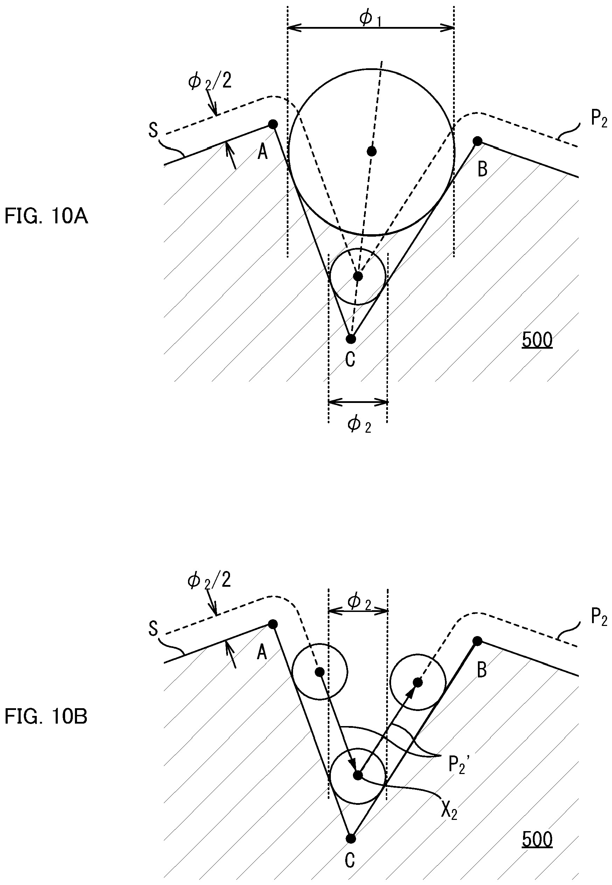

Next, an example of a third laser projection process is described. Fig. 10 is a schematic sectional view for use in explaining a laser projection process of this example. In this example, the laser projection process has a first step and a second step. This example is different from the example of the second laser projection process in their second steps.

This example is identical to the example of the second laser projection process (Figs. 7(a) and 7(b)) to the completion of the first step. Similar to the example of the second laser projection process, it can be said that the first step is a rough processing step.

The second step is for moving a focal position of a laser having a process diameter smaller than the first process diameter ϕ₁ along a predetermined processing path P₂ in the unprocessed portion of the workpiece 500 which has left after the first step. That is, it can be said that the second step is a finishing step of processing the unprocessed portion of the workpiece 500 that has left after the first step.

In this example, in the second step, a laser having a second process diameter ϕ₂ that is smaller than the first process diameter ϕ₁ is used. The second process diameter ϕ₂ has a preset value. The second process diameter ϕ₂ may be determined in consideration of irregularities on the process surface S, and may be a sufficiently small process diameter for processing any depression on the process surface S.

In this example, as shown in Fig. 10(a), the processing path P₂ along which the laser is projected is determined by the data generation device 200. The processing path P₂ is a set of points whose distance from the process surface S is half the second process diameter ϕ₂.

In the second step, as shown in Fig. 10(b), the workpiece 500 is processed using a laser having a second process diameter ϕ₂. In this case, it is not necessary to move the focal position of the laser along the entire length of the processing path P₂ because processing is required only for the portion that has left unprocessed after the processing using the laser having the first process diameter ϕ₁ described above. In this example, the focal position of the laser is just moved in the vicinity of X₂ (P₂' in Fig. 10(b)) on the processing path P₂. At this stage, in the area near the point C, the portion that could not be processed by the processing using the laser having the first process diameter ϕ₁ can be processed.

### [Program for processing]

The program for controlling the processing device 400 according to this embodiment is loaded into the control device 300 and executed.

The program for processing according to this embodiment is for causing the control device 300 to execute the aforementioned processing method. That is, the program for processing according to this embodiment causes the control device 300 to store a data of a process surface S to be formed in the workpiece 500 and the processing path data, both of which have been created by the data generation device 200. Next, the program causes the control device 300 to establish a processing path of a laser projected into the workpiece 500 in order to form an object having the process surface S.

Furthermore, the program causes the control device 300 to adjust the process diameter of the laser based on the process diameter data included in the processing path data. The processing path data is determined based on the profile of the process surface. In particular, the process diameter data included in the processing path data is determined based on irregularities of the process surface.

The processing method according to this embodiment and the processing system 100 and the program for processing for performing the method have been described. The processing method according to this embodiment is a method including a step of moving a focal position of a laser along a certain processing path in order to form an object having a certain process surface, the processing method including: a first step of moving a focal position of a laser having a first process diameter along a certain processing path; and a second step of moving a focal position of a laser having a second process diameter along a certain processing path in the case that a projection area of a laser comes into contact with at least two points of the certain process surface, the projection area of the laser having the first process diameter, the second process diameter being smaller than the first process diameter.

According to conventional processing methods, processing is performed using lasers with a fixed process diameter irrespective of irregularities of a process surface. Thus, conventional processing methods have a limitation in that the laser cannot be projected toward the depression when the process surface has a depression smaller than the process diameter. As a result, it is difficult for such conventional processing methods to achieve processing with high precision when the process surface is complicated.

With the processing method according to this embodiment, the limitation as mentioned above can be reduced and thus it is possible to form a depression having a size which cannot be achieved using conventional processing methods. Therefore, with the processing method according to this embodiment, even if the process surface is complicated, it is possible to process it with high precision.

Furthermore, with the processing method according to this embodiment, a conventional processing method can be used for the process surface that can be processed by the conventional processing method, and processing is performed using a laser having a process diameter smaller than that of the conventional diameter only for the process surface that cannot be processed by the conventional processing method. Thus, the processing time does not significantly increase.

Furthermore, with the processing method according to this embodiment, it is possible to process the maximum area that can be processed by the laser having the first process diameter in the first step, so that areas that can be processed in the second step can be minimized. This increases the processing efficiency.

In the processing method according to this embodiment, in the second step, the focal position of the laser is moved along the certain processing path with the second process diameter being changed such that the projection area of the laser comes into contact with at least two points of the certain process surface. As a result, a range of relative movement between the projection unit 402 and the holding unit 404 (the workpiece 500) controlled by the drive mechanism 406 can be reduced. This increases the processing efficiency.

In the processing method according to this embodiment, the second process diameter is a predetermined process diameter. Thus, there is no limitation on speed of moving the focal position of the laser in the second step, because it is not necessary to control the second process diameter. This increases the processing efficiency.

In the processing method according to this embodiment, the first step is a rough processing step, and the second step is a finishing step in which a portion that has been left unprocessed after the first step is processed. This makes it possible to perform finishing in the second step by performing the second step after the first step even in the case that the control of the laser process diameter by the projection unit 402 cannot follow the speed of moving the focal position of the laser in the first step.

With the processing method according to this embodiment, the first process diameter and the second process diameter are adjusted using a relationship of the process diameter to a pre-acquired laser projection condition. By this, any laser projection condition can be selected for adjusting to a desired process diameter.

The processing system 100 for performing the processing method according to the aforementioned embodiment can be configured. By performing the method using such a processing system 100, similar effects to those described above can be obtained.

Furthermore, a program for processing for performing the processing method according to this embodiment can be configured. By executing such a program for processing in the processing system 100, similar effects to those described above can be obtained.

It is also possible to supply a program to a computer using a non-transitory computer readable medium with the machining program in the above embodiment stored therein. Examples of the non-transitory computer readable medium include magnetic storage media (e.g. flexible disks, magnetic tapes, and hard disk drives), and CD-ROMs (read only memories).

The above embodiment is provided as an example of the invention and does not limit the scope of the invention. Various omissions, substitutions, and changes can be made to the above configuration without departing from the subject matter of the invention. The above embodiment and modifications thereof are included in the scope and spirit of the invention as well as within the invention recited in the claims and equivalents thereof.

## Claims

1. A processing method comprising a step of moving a focal position of a laser along a certain processing path in order to form an object having a certain process surface, the processing method comprising:
a first step of moving a focal position of a laser having a first process diameter along a certain processing path; and
a second step of moving a focal position of a laser having a second process diameter along a certain processing path in the case that a projection area of the laser having the first process diameter comes into contact with at least two points of the certain process surface, the second process diameter being smaller than the first process diameter.

2. The processing method according to Claim 1, wherein
in the second step, the focal position of the laser is moved along the certain processing path with the second process diameter being changed such that the projection area of the laser comes into contact with at least two points of the certain process surface.

3. The processing method according to Claim 1, wherein the second process diameter is a predetermined process diameter.

4. The processing method according to Claim 2 or 3, wherein
the first step is a rough processing step and
the second step is a finishing step in which a portion that has been left unprocessed after the first step is processed.

5. The processing method according to any one of Claims 1 to 4, wherein
the first process diameter and the second process diameter are adjusted using a relationship of a process diameter to a pre-acquired laser projection condition.

6. A processing system comprising:
a data generation device for generating a data of a certain process surface and a data of a processing path, the process surface being to be formed in a workpiece;
a processing device that moves a focal position of a laser along the processing path to form an object having the certain process surface; and
a control device for controlling the processing device, the control device reducing a process diameter of the laser in the case that the projection area of the laser comes into contact with at least two points of the certain process surface.

7. A program for processing, the program being for causing a control device to:
store a data of a process surface to be formed in a workpiece;
establish a processing path of a laser projected into the workpiece in order to form an object having the process surface; and
reduce a process diameter of the laser in the case that the projection area of the laser provided by a focal position travelling along the processing path comes into contact with at least two points of the process surface.
